# EUROPEAN PATENT APPLICATION

(11) **EP 4 040 373 A1**
(43) Date of publication of application: **10.08.2022**
(21) Application number: 21167951.9
(22) Date of filing: 12.04.2021
(51) Int. Cl.: G06Q 90/00

(54) **METHODS AND SYSTEMS FOR GENERATING HIERARCHICAL DATA STRUCTURES BASED ON CROWDSOURCED DATA FEATURING NON-HOMOGENOUS METADATA**

(30) Priority: 05.02.2021 US 202117168609
(71) Applicant: The Bank Of New York Mellon, New York, NY 10286 (US)
(72) Inventor: NEALE, Corinne, London, E14 9HN (GB); XU, Xiaosong, Flushing, 11354 (US)
(74) Representative: V.O.

(57) **Abstract**

The methods and systems relate to generating hierarchical data structures based on crowdsourced data featuring non-homogenous metadata. For example, the methods and systems address challenges with conventional crowdsourcing platforms, which fail to provide a mechanism for identifying contributors that would be best fit for a task, particularly when there is no standardized criteria for that task. Additionally, the methods and systems negate the need for peer-vetting and manual review of contributions thus significantly limiting bottlenecks in the development process. The methods and systems provide these advantages through the use of a novel data structure generated based on machine learning.

## Description

### FIELD OF THE INVENTION

Embodiments of the invention generally relate to generating hierarchical data structures based on crowdsourced data featuring non-homogenous metadata.

### BACKGROUND

In conventional computer systems, crowdsourced projects involve multiple contributors working together to produce a given project (e.g., the goal of the crowdsourced project). To facilitate this team activity, team members may submit contributions to the project to a project management system. The project management system, which may include a crowdsource database that features a status of the project as well as individual submission, may then compare, aggregate, and/or filter contributions from different contributors. Conventionally, crowdsourcing is performed mainly on the Internet, which provides a particularly beneficial venue for crowdsourcing since individuals tend to be more open in web-based projects where they are not being physically judged or scrutinized, and thus can feel more comfortable sharing. However, the openness and lack of scrutinization also poses a problem for crowdsourcing. While participation may be high, conventional crowdsourcing platforms fail to provide a mechanism for identifying contributors that would be best fit for a task, particularly when there is no standardized criteria for that task. In such cases, peer-vetting and manual review of contributions may create significant bottlenecks and include decisions that are subjective and/or dependent on public support.

### SUMMARY

Accordingly, methods and systems are described herein for improvements to crowdsourcing and crowdsource platforms. Specifically, the methods and systems relate to generating hierarchical data structures based on crowdsourced data featuring non-homogenous metadata. For example, the methods and systems address challenges with conventional crowdsourcing platforms, which fail to provide a mechanism for identifying contributors that would be best fit for a task, particularly when there is no standardized criteria for that task. Additionally, the methods and systems negate the need for peer-vetting and manual review of contributions thus significantly limiting bottlenecks in the development process. The methods and systems provide these advantages through the use of a novel data structure generated based on machine learning artificial intelligence statistical techniques, specifically natural language processing and machine learning, both of which are thereafter referred to as "machine learning."

For example, online crowdsourcing is commonly used as a form of social computing to derive learnings from a broad group of users. Online crowdsourcing is categorized in academic literature as either explicit, or implicit when data is collected as a side effect of conducting a task. The performance of either of these techniques however remains problematic as they are highly dependent on platform representation, user selection, and the ability to interpret and act on the outcome. As a result crowdsourcing is not currently used to derive learnings in specialized areas lacking common standards.

However, even after the reasons for the limitations in conventional crowd source platform are realized, numerous technical challenges remain in order to automate decisions related to platform representation, user selection, and aggregation of contributions. To address these technical challenges, the methods and systems use a data structure that supports an unconventional data acquisition procedure. Specifically, the methods and system may receive data structure recommendations (e.g., recommendations featuring content for inclusion in a crowdsourced database). The methods and systems may then retrieve metadata corresponding to the recommendations that indicate an organization hierarchy used by a data source (or user) corresponding to the data structure recommendation. The metadata is then used by a machine learning model to organize each of the recommendations into a native hierarchical data structure of a crowdsource database. For example, the system may use natural language processing ("NLP") and in particular semantic relationships and textual similarities to determine data structure recommendations that correspond to each other and/or correspond to a particular location in the native hierarchical data structure of a crowdsource database. Furthermore, as the native hierarchical data structure of the crowdsource database is based on the data structure recommendations that are received, the native hierarchical data structure of the crowdsource database may automatically update itself as additional data structure recommendations are received.

For example, the system may generate an initial mapping of hierarchies across different data sources using a machine learning model (e.g., by semantically linking similar attributes across sources). The system may then automatically validate contributions and provide statistics to aid users in reviewing contributions to the crowdsource project (e.g., for determining the ultimate selection, elimination, or rejection of different contributions). The system may dynamically update the initial mapping of hierarchies as additional contributions to the crowdsourcing project are received as well as select new contributions that are required.

In some aspects, the systems and methods for generating hierarchical data structures based on crowdsourced data featuring non-homogenous metadata are described. For example, the system may receive a first data structure recommendation from a first user, wherein the first data structure has a first metadata structure. The system may receive a second data structure recommendation from a second user, wherein the second data structure has a second metadata structure. The system may input the first data structure recommendation and the second data structure recommendation into a machine learning model, wherein the machine learning model is trained to synchronize data structure recommendations based on metadata structures corresponding to inputted data structure recommendations. The system may receive an output of the machine learning model indicating a first record in a native hierarchical data structure of a crowdsource database for populating both the first data structure recommendation and the second data structure recommendation. The system may, in response to determining that the first data structure recommendation and the second data structure recommendation is populated at the first record, comparing the first data structure recommendation and the second data structure recommendation. The system may update the crowdsource database based on comparing the first data structure recommendation and the second data structure recommendation.

Various other aspects, features, and advantages of the invention will be apparent through the detailed description of the invention and the drawings attached hereto. It is also to be understood that both the foregoing general description and the following detailed description are examples, and not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification "a portion," refers to a part of, or the entirety of (i.e., the entire portion), a given item (e.g., data) unless the context clearly dictates otherwise.

### BRIEF DESCRIPTION OF THE DRAWINGS

FIG. 1 depicts a user interface for interacting with crowdsourced data, in accordance with an embodiment.
FIG. 2 depicts illustrative diagrams for generating hierarchical data structures based on non-homogenous metadata, in accordance with an embodiment.
FIG. 3 depicts an illustrative system for generating hierarchical data structures based on crowdsourced data featuring non-homogenous metadata, in accordance with an embodiment.
FIG. 4 depicts an illustrative architecture for metadata of the hierarchical data structures, in accordance with an embodiment.
FIG. 5 depicts a process for generating hierarchical data structures based on crowdsourced data featuring non-homogenous metadata, in accordance with an embodiment.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art, that the embodiments of the invention may be practiced without these specific details, or with an equivalent arrangement. In other cases, well-known structures and devices are shown in block diagram form in order to avoid unnecessarily obscuring the embodiments of the invention.

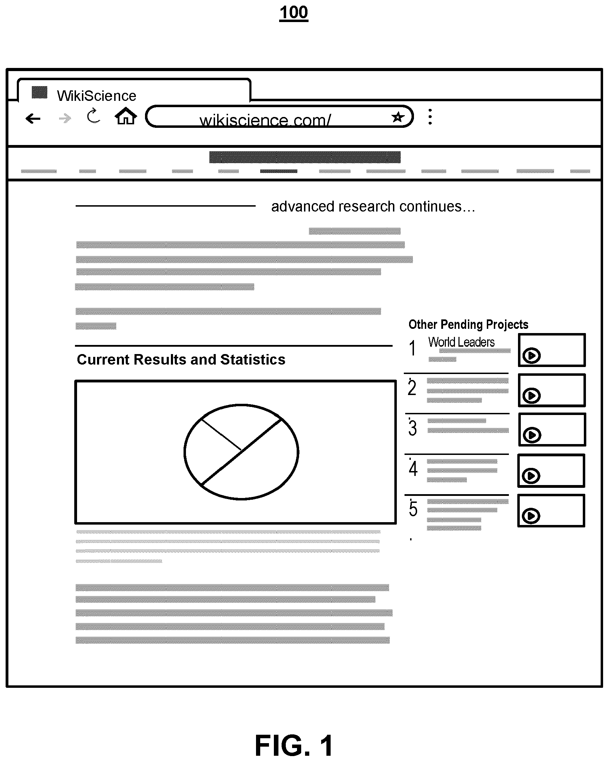

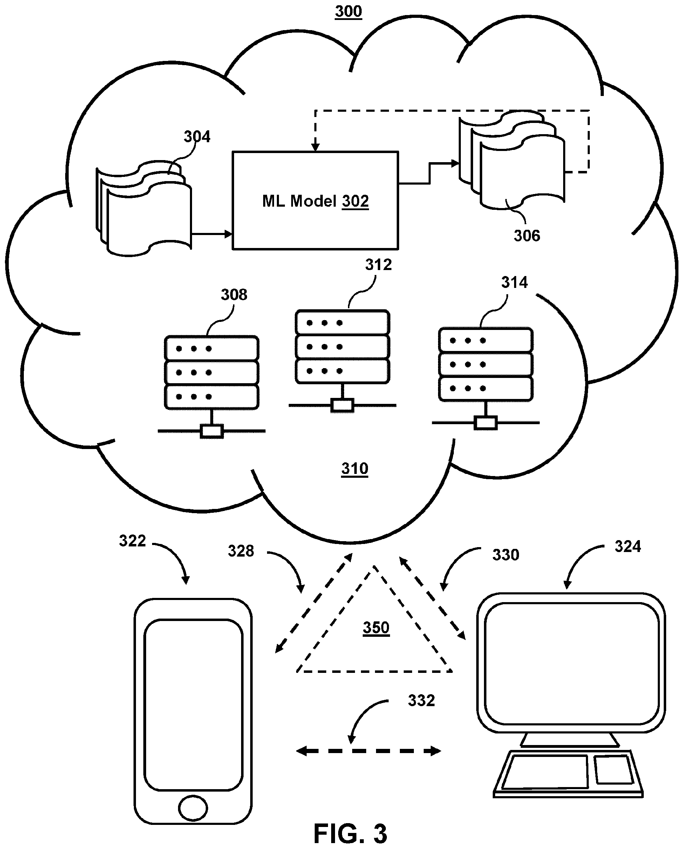

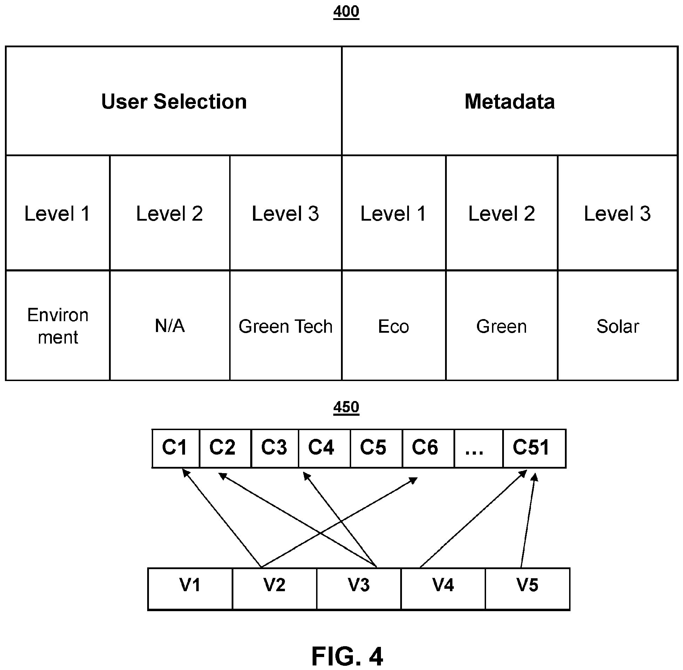

FIG. 1 depicts a user interface for interacting with crowdsourced data, in accordance with an embodiment. For example, the system and methods described herein may generate for display, on a local display device (e.g., user device 322 and 324 (FIG. 3) described below), a user interface for a crowdsource platform. For example, the system may display content that is published to a crowdsource database as well as a hierarchical organization of that content. Users may access and/or edit content in the crowdsource database by interacting with user interface 100. For example, users may see pending requests for crowd sourced data and/or pending projects. User may also submit contributions as well as user selections of hierarchies (e.g., as described in relation to FIG. 4 below). Users may also view submissions of other users (e.g., contributions made by other users to the same or different crowd source project).

For example, user interface 100 may represent the output of the system described herein. The system may provide a data acquisition system for online crowdsourcing combining explicit, implicit, and human intelligence techniques to widen the applicability of crowdsourcing to specialized areas lacking common standards. The system may interpret and act on crowdsourcing outcomes established through metadata of the many ways users may choose to execute the tasks (i.e. the data source they choose to use to execute the task, the references they choose for guidance, etc.). The system may leverage NLP to build a common foundation to interpret outcome across users' different taxonomies and nomenclatures. The system may also ensure platform representation is established by selecting users for specialized tasks with valuable experience in specific domain. The system may also eliminate users who do not complete the specialized tasks, and the system may use iterative feedback loops between users on the outcome of tasks executed allowing for a sophisticated combination of data-intensive, complex automation and deep community involvement.

As referred to herein, a "user interface" may comprise a human-computer interaction and communication in a device, and may include display screens, keyboards, a mouse, and the appearance of a desktop. For example, a user interface may comprise a way a user interacts with an application or a website. As referred to herein, "content" should be understood to mean an electronically consumable user asset, such as video clips, audio, content information, pictures, rotating images, documents, playlists, websites, articles, books, electronic books, blogs, advertisements, chat sessions, social media, applications, games, and/or any other media or multimedia and/or combination of the same. As referred to herein, the term "multimedia" should be understood to mean content that utilizes at least two different content forms described above, for example, text, audio, images, video, or interactivity content forms.

User interface 100 may also include content in a plurality of sections. For example, user interface 100 may include categories and sub-categories as well as project and/or topic groupings each of which may be divided into sections. As referred to herein, a "section" may comprise any of the more or less distinct parts into which something the content may be divided or from which the content is made up. For example, a section may be distinguished from another section by one or more section characteristics. In user interface 100, the system may identify a section of the plurality of sections as having a section characteristic.

A section characteristic may comprise any characteristic that distinguishes one section from another. For example, a section characteristic may be media-related information (e.g., ordering, heading information, titles, descriptions, ratings information (e.g., parental control ratings, critic's ratings, etc.), source code data (e.g., HTML, source code headers, etc.), genre or category information, subject matter information, author/actor information, logo data, or other identifiers for the content provider), media format, file type, object type, objects appearing in the content (e.g., product placements, advertisements, keywords, context), or any other suitable information used to distinguish one section from another. In some embodiments, the section characteristic may also be human-readable text. The section characteristic may be determined to be indicative of the section being of interest to the user based on a comparison of the section characteristic and user profile data for the user.

Data structure recommendations may be received from one or more users and content found therein may be used to update a crowdsource database. For example, a data structure recommendation may include any communication that contributes to a selection of a hierarchy for a crowdsource database and/or contributes content to the crowd source database. A data structure recommendation may include a metadata structure. A metadata structure may include any information that describes an organization relationship of content (or a topic or category of the content) at its respective data source. For example, the metadata structure may indicate how a topic is indexed and/or archived at a native data source. Each data structure recommendation may correspond to content (e.g., content to be included in a crowdsource database project) and/or a metadata structure.

The system may process numerous types of recommendations as described herein. For example, the system may process data source recommendation from a user. For example, a user (e.g., via user interface 100) may suggest a data source for any contributions supplied by the user. This data source recommendation may comprise a user selection as described in FIG. 4 below in which a user suggested a recommended taxonomy for a data source and/or contribution. The system may process data mapping recommendations (e.g., from a contributor and/or other users), which may be used to train model (e.g., a machine learning model and/or NLP model). In another example, the system may process recommendations received as outputs from a model (e.g., a machine learning model and/or NLP model). For example, recommendations outputted by a NLP model may be used to build a native hierarchical data structure of a crowdsource database. Finally, in yet another example, the system may receive recommendation from other users (e.g., presented in user interface 100) that describe other contributions to a crowdsource project. Using these recommendations, the system may provide feedback loop for a crowdsource project.

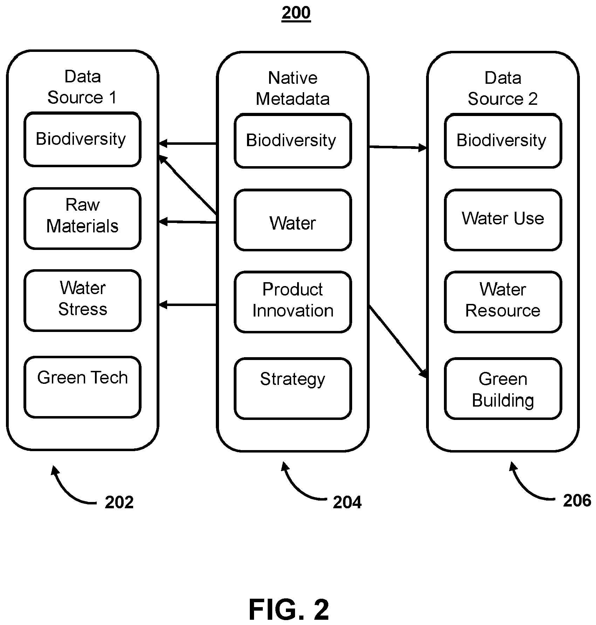

FIG. 2 depicts illustrative diagrams for generating hierarchical data structures based on non-homogenous metadata, in accordance with an embodiment. Diagram 200 shows metadata for first data source 202, second data source 206, and crowdsource database 204. For example, metadata for first data source 202 and second data source 206 may not correspond (e.g., the metadata may be non-homogenous). The metadata for each of first data source 202, second data source 206, and crowdsource database 204 may be native to the respective system. For example, each of first data source 202, second data source 206, and crowdsource database 204 may correspond to a different entity (e.g., a professional, scientific, academic, and/or governmental source) and/or a crowdsourcing project (e.g., a project related to a given discipline, topic, theme, etc.).

For example, FIG. 2 may represent crowd sourcing project to determine global standards for environmentally sustainable investing. For example, currently there are no globally accepted standards to guide sustainability investing: no globally accepted definition of what sustainability is; no global standards on the data required to analyze sustainable investments; and no global standards to label investments as sustainable investments leading to widespread concerns of green-washing and social-washing. The system may derive global standards implied by crowd practices, combining platform representation through sustainability definition tasks, users' selection through elimination if the selected definition is not used to screen investment portfolios, and interpretation of outcome through metadata mapping any data source to any taxonomy with feedback loops to iteratively improve machine learnings.

For example, the system may receive data structure recommendations (e.g., recommendations featuring content for inclusion in a crowdsourced database). The system may then retrieve metadata corresponding to the recommendations that indicate an organization hierarchy used by a data source (or user) corresponding to the data structure recommendation. The metadata is then used by a machine learning model to organize each of the recommendations into a native hierarchical data structure of a crowdsource database. For example, the system may use NLP and in particular semantic relationships and textual similarities to determine data structure recommendations that correspond to each other and/or correspond to a particular location in the native hierarchical data structure of a crowdsource database. Furthermore, as the native hierarchical data structure of the crowdsource database is based on the data structure recommendations that are received, the native hierarchical data structure of the crowdsource database may automatically update itself as additional data structure recommendations are received.

Native data may comprise native data or native data-formats comprise data that originates from and/or relates to organizational structure of an entity and/or its respective plugins. In some embodiments, native data may include data resulting from native code, which is code written specifically for the entity's system, application management systems of the entity, and/or respective plugins designed therefor. The native data may also comprise data generated by the entity (e.g., content).

For example, first data source 202 may have a first native hierarchical data structure and/or first metadata structure. The first native hierarchical data structure and/or first metadata structure may correspond to the entity corresponding to first data source 202. For example, a hierarchical database structure may be a structure in which data is organized into a tree-like structure. For example, the data may be stored as records which are connected to one another through links. A record may be a collection of fields, with each field containing only one value (e.g., content). The type of a record may define which fields the record contains. In some embodiments, the tree structure may comprise a node-link structure in which a parent node links to child nodes, nested sets (e.g., in relational databases), radial trees, and/or other organizational systems.

For example, first data source 202 may have a first native hierarchical data structure and/or first metadata structure. The first metadata structure may indicate a categorical grouping of one or more topics as determined by a first data source. The categorical grouping may indicate the node-link structures, etc. of the first data source. Similarly, the first metadata structure may indicate a categorical grouping that the contributor of a first data structure recommendation is familiar with.

Second data source 206 may correspond to a data source of a second entity (e.g., a second professional, scientific, academic, and/or governmental source). Second data source 206 may have a second native hierarchical data structure and/or second metadata structure. The second native hierarchical data structure and/or second metadata structure may correspond to the entity corresponding to second data source 206. Notably, second data source 206 may have a different hierarchical database structure may be a structure in which may or may not be organized into a tree-like structure.

For example, second data source 206 may have a second native hierarchical data structure and/or second metadata structure. The second metadata structure may indicate a categorical grouping of one or more topics as determined by a second data source. The categorical grouping may indicate the node-link structures, etc. of the second data source. Similarly, the second metadata structure may indicate a categorical grouping that the contributor of a second data structure recommendation is familiar with.

Crowdsource database 204 may correspond to a crowdsource database for a project, topic, and/or entity (e.g., a professional, scientific, academic, and/or governmental source), which may be distinct from the first and second entity. Crowdsource database 204 may have a native hierarchical data structure and/or native metadata structure. Furthermore, the system may use machine learning to generate a hierarchical data structure for crowdsource database 204 based on first data source 202 and second data source 206 even though first data source 202 and second data source 206 may feature different (e.g., non-homogenous) metadata. In some embodiments, first data source 202, second data source 206, and crowdsource database 204 may correspond to data source 202, data source 206, and crowdsource database 204, respectively. For example, the system may organize content and/or metadata received from disparate data sources (and/or in nonhomogeneous formats) into a single homogenous structure.

For example, crowdsource database 204 may have a native hierarchical data structure and/or metadata structure that is specific to crowdsource database 204. The crowdsource metadata structure may indicate a categorical grouping of one or more topics as determined by the crowdsource database (or platform) based on data source 202 and data source 206. The categorical grouping may indicate the node-link structures, etc. that categorizes the content of data source 202 and data source 206. For example, the crowdsource database (or platform) may categorize the metadata as described in FIG. 4.

The system may generate the metadata in crowdsource database. For example, the metadata may be constructed using an unsupervised NLP model to iteratively map all users' ways-of-working (e.g., the data source they choose to use to execute the task, the references they choose for guidance, etc. based on their similarity). For example, the system may use mapping training examples to obtain vector representations of categories from data sources and references. The NLP model inputs text for each given data source and reference, comprising of category name, (if available) names of parent categories, and (if available) category description, and/or other data. The system may then apply a cross category mapping model that uses a function of distance between the vector representations of categories from the data sources. For example, the system may generate an initial mapping of hierarchies (e.g., the metadata of crowdsource database 204) across different data sources (e.g., data source 202 and data source 206) using a NLP model (e.g., by semantically linking similar attributes across sources). The system may then automatically validate contributions and provide statistics to aid users in reviewing contributions to the crowdsource project (e.g., for determining the ultimate selection, elimination, or rejection of different contributions).

It should be noted that as described herein, the use of artificial intelligence (AI) such as NLP and machine learning may be used interchangeably and/or embodiments described using NLP may also use machine learning. For example, AI may be used an as umbrella term for both machine learning and NLP. AI may comprise any learning by a machine (e.g., learning that simulates that human intelligence) and/or the mimicking of cognitive capabilities, like learning from examples and solving problems. In some embodiments, NLP may be used to understand and translate human language (e.g., via translation, keyword extraction, topic classification, etc.). Machine learning may be used to apply algorithms that teach machines how to automatically learn and improve from experience without being explicitly programmed. In some embodiments, the system may combine NLP and machine learning model (e.g., collectively referred to as machine learning model) to perform one or more of the tasks described herein.

For example, in some embodiments, the system may use a machine learning model (e.g., featuring NLP) for topic analysis (e.g., organizing and understanding large collections of text data). The system may assign "tags" or categories according to each individual text's topic or theme, which may correspond to the data structures described herein. For example, NLP may be used to interpret human language to allow for patterns to be detected by the system and to determine semantic structures within texts using NLP topic modelling, which is an unsupervised machine learning technique in which the model may infer patterns and cluster similar expressions without needing to define topic tags or train data beforehand. It should also be noted that in some embodiments, the system may use both supervised training and/or a combination of supervised and unsupervised training.

FIG. 3 depicts an illustrative system for generating hierarchical data structures based on crowdsourced data featuring non-homogenous metadata, in accordance with an embodiment. For example, system 300 may represent the components used for generating hierarchical data structures based on crowdsourced data featuring non-homogenous metadata, as shown in FIG. 1. As shown in FIG. 3, system 300 may include mobile device 322 and user terminal 324. While shown as a smartphone and personal computer, respectively, in FIG. 3, it should be noted that mobile device 322 and user terminal 324 may be any computing device, including, but not limited to, a laptop computer, a tablet computer, a hand-held computer, other computer equipment (e.g., a server), including "smart," wireless, wearable, and/or mobile devices. FIG. 3 also includes cloud components 310. Cloud components 310 may alternatively be any computing device as described above and may include any type of mobile terminal, fixed terminal, or other device. For example, cloud components 310 may be implemented as a cloud computing system and may feature one or more component devices. It should also be noted that system 300 is not limited to three devices. Users, may, for instance, utilize one or more devices to interact with one another, one or more servers, or other components of system 300. It should be noted, that, while one or more operations are described herein as being performed by particular components of system 300, those operations may, in some embodiments, be performed by other components of system 300. As an example, while one or more operations are described herein as being performed by components of mobile device 322, those operations, may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., notifications).

Additionally, as mobile device 322 and user terminal 324 are shown as touchscreen smartphones, these displays also act as user input interfaces. It should be noted that in some embodiments, the devices may have neither user input interface nor displays and may instead receive and display content using another device (e.g., a dedicated display device such as a computer screen and/or a dedicated input device such as a remote control, mouse, voice input, etc.). Additionally, the devices in system 300 may run an application (or another suitable program). The application may cause the processors and/or control circuitry to perform operations related to generating alternative content.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include first data source 308, second data source 312 and crowdsource database 314. First data source 308 may correspond to a data source of a first entity (e.g., a first professional, scientific, academic, and/or governmental source). First data source 308 may have a first native hierarchical data structure and/or first metadata structure. The first native hierarchical data structure and/or first metadata structure may correspond to the entity corresponding to first data source 308. Second data source 312 may correspond to a data source of a second entity (e.g., a second professional, scientific, academic, and/or governmental source). Second data source 312 may have a second native hierarchical data structure and/or second metadata structure. The second native hierarchical data structure and/or second metadata structure may correspond to the entity corresponding to second data source 312. Crowdsource database 314 may correspond to a crowdsource database for a project, topic, and/or entity (e.g., a professional, scientific, academic, and/or governmental source), which may be distinct from the first and second entity. Crowdsource database 314 may have a native hierarchical data structure and/or native metadata structure. Furthermore, the system may use machine learning to generate a hierarchical data structure for crowdsource database 314 based on first data source 308 and second data source 312 even though first data source 308 and second data source 312 may feature different (e.g., non-homogenous) metadata. In some embodiments, first data source 308, second data source 312, and crowdsource database 314 may correspond to data source 202, data source 206, and crowd database 204, respectively.

Cloud components 310 may also include model 302, which may be a machine learning model (e.g., as described in FIG. 2). Model 302 may take inputs 304 and provide outputs 306. The inputs may include multiple datasets such as a training dataset and a test dataset. Each of the plurality of datasets (e.g., inputs 304) may include data subsets related to hierarchical data structures for the crowdsource database, metadata structures, native data and metadata structures. In some embodiments, outputs 306 may be fed back to model 302 as input to train model 302 (e.g., alone or in conjunction with user indications of the accuracy of outputs 306, labels associated with the inputs, or with other reference feedback information). For example, the system may receive a first labeled feature input, wherein the first labeled feature input is labeled with a known data structure. The system may then train the first machine learning model to classify inputted data structures to known data structures of hierarchical data structures. For example, the machine learning model may categorize the metadata as described in FIG. 4.

In another embodiment, model 302 may update its configurations (e.g., weights, biases, or other parameters) based on the assessment of its prediction (e.g., outputs 306) and reference feedback information (e.g., user indication of accuracy, reference labels, or other information). In another embodiment, where model 302 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302 and an input known to correspond to that classification may be input into an input layer of model 302 during training. During testing, an input without a known classification may be input into the input layer, and a determined classification may be output.

In some embodiments, model 302 may include multiple layers (e.g., where a signal path traverses from front layers to back layers). In some embodiments, back propagation techniques may be utilized by model 302 where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether or not a given input corresponds to a classification of model 302 (e.g., hierarchical data structures).

System 300 also includes API layer 350. In some embodiments, API layer 350 may be implemented on user device 322 or user terminal 324. Alternatively or additionally, API layer 350 may reside on one or more of cloud components 310. API layer 350 (which may be A REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages including Ruby, Java, PHP, and JavaScript. SOAP Web services have traditionally been adopted in the enterprise for publishing internal services as well as for exchanging information with partners in B2B transactions.

API layer 350 may use various architectural arrangements. For example, system 300 may be partially based on API layer 350, such that there is strong adoption of SOAP and RESTful Web-services, using resources like Service Repository and Developer Portal but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open source API Platforms and their modules. API layer 350 may use a developer portal. API layer 350 may use strong security constraints applying WAF and DDoS protection, and API layer 350 may use RESTful APIs as standard for external integration.

FIG. 4 depicts an illustrative architecture for metadata of the hierarchical data structures, in accordance with an embodiment. For example, FIG. 4 includes illustrative architecture 400 and 450. Architecture 400 indicates a metadata structure for a data structure recommendation. For example, architecture 400 may include user selections of a proposed metadata structure for the native hierarchical data structure. These user selections may correspond to selections made by a user into user interface 100. These user selections may be included in the metadata structure of a data structure recommendation. Additionally, the metadata structure may include a native hierarchical organization specific to the data source corresponding to the data structure recommendation.

The system (e.g., the machine learning model described in FIG. 3) may use this information to determine a hierarchical data structure for the crowdsource database. For example, the system may map all categories from a user chosen data input source to metadata categories for the hierarchical data structure for the crowdsource database. Furthermore, for each input source category, there may be one or more equivalent metadata category for the hierarchical data structure for the crowdsource database. For example, the system may use a many to many mappings system when mapping of a metadata structure of a data structure recommendation to the hierarchical data structure for the crowdsource database as shown in architecture 450. For example, the system may map many different records in metadata structures to one or more different records in a native hierarchy of a crowdsource database.

For example, using architecture 400, the system may extend crowdsourcing to expert knowledge areas lacking domain standards. In the absence of standards, traditional crowdsourcing standardized questions cannot be asked. In order to answer non-standardized questions, the system generates a common reference. Using architecture 400, the common reference takes the form of a dynamic metadata, continuously updated with expert users' ways-of-working (e.g., the data and references users prefer using to execute the specialized task through which crowdsourcing data is collected). Additionally, the system may actively query the mapping between different data sources in the metadata leveraging on NLP and user selections to process the inputs provided by users (e.g., as part of data structure recommendations).

In some embodiments, the machine learning model may be trained to synchronize data structure recommendations based on metadata structures corresponding to inputted data structure recommendations. For example, the machine learning model may be trained to synchronize keywords in the metadata structure. For example, the system may retrieve "environment" and "eco" from architecture 400. The system may compare these to keywords in another metadata structure for another data structure recommendation or to a metadata structure for native hierarchical structures for a crowdsource database. For example, the system may generate an initial mapping of hierarchies across different data sources using a machine learning model (e.g., by semantically linking similar attributes across sources). The machine learning model may determine keyword similarities and/or semantic closeness between keywords in the first and second content, respectively, or the data sources for the first and second content. For example, the system may then retrieve a first category keyword for the first data source and retrieving a second category keyword for the second data source. For example, the system may identify a keyword of a topic (or category) under which the first data source indexes and/or organized the first data structure recommendation in its native hierarchy. Additionally, the system may identify a keyword of a topic (or category) under which the second data source indexes and/or organized the second data structure recommendation in its native hierarchy. The system may then determine a first similarity between the first category keyword and the second category keyword. For example, the system may determine a vector space distance between two textual entities (words, sentences, documents, etc.). The system may then compare the first similarity to a threshold similarity. The system may then determine that the first category keyword and the second category keyword correspond based on the first similarity equaling or exceeding the threshold similarity (and not correspond otherwise). The system may then populate the first data structure recommendation and the second data structure recommendation at the first record in the hierarchical data structure in response to determining that the first category keyword and the second category keyword correspond. It should be noted that the system may also compare a similarity of first and second content according to the above.

In some embodiments, the system may also use additional factors such as a corresponding user selection of a taxonomy and/or mapping. For example, the system may use both the metadata structure for a data source as well as a user selection entered by a user to determine an initial mapping and/or a record in the native hierarchy for placing the data structure recommendation.

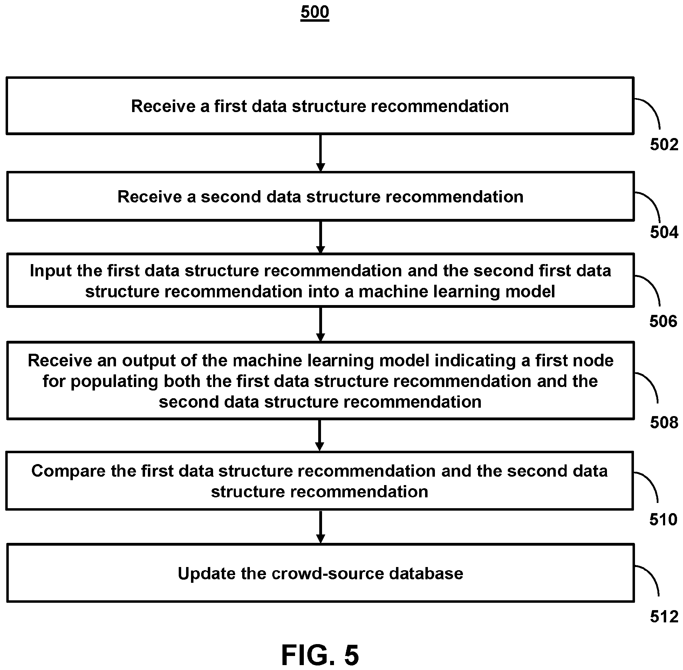

FIG. 5 depicts a process for generating hierarchical data structures based on crowdsourced data featuring non-homogenous metadata, in accordance with an embodiment. For example, FIG. 5 shows process 500, which may be implemented by one or more devices. The system may implement process 500 in order to generate one or more of the user interfaces (e.g., as described in FIG. 1). For example, process 500 may describe a process for receiving contributions from members of a crowd for a crowd source project.

At step 502, process 500 (e.g., using control circuitry and/or one or more components described in FIGS. 1-4) receives a first data structure recommendation (e.g., receive a first data structure recommendation from a member of the crowd). For example, the system may receive a first data structure recommendation from a first user, wherein the first data structure recommendation has a first metadata structure. For example, the first data structure may include first content. The first content may comprise content for publishing in a crowdsourced database. The first data structure may also have a first metadata structure. The first metadata structure may indicate how the first data structure recommendation is organized among other content. For example, the organization may indicate that the first metadata structure is a sub-category of another category. Additionally or alternatively, the first metadata structure may indicate sub-categories that fall within the first data structure and/or components of the first data. For example, the first metadata may include a location and hierarchical relationship of the first data structure recommendation with respect to a hierarchical relationship that is native the to first data structure. For example, the first metadata may indicate a record that corresponds to a first native hierarchical relationship of the first data structure. In some embodiments, the first metadata structure may indicate a first data source upon which the first data structure recommendation is based.

At step 504, process 500 (e.g., using control circuitry and/or one or more components described in FIGS. 1-4) receives a second data structure recommendation from a second user (e.g., receive a second data structure recommendation from a member of the crowd). For example, the system may receive a second data structure recommendation from a second user, wherein the second data structure recommendation has a second metadata structure. For example, similar to the first data structure, the second data structure may include second content. The second content may comprise content for publishing in a crowdsourced database. The second data structure may also have a second metadata structure. The second metadata structure may indicate how the second data structure recommendation is organized among other content. For example, the organization may indicate that the second metadata structure is a sub-category of another category. Additionally or alternatively, the second metadata structure may indicate sub-categories that fall within the second data structure and/or components of the second data. For example, the second metadata may include a location and hierarchical relationship of the second data structure recommendation with respect to a hierarchical relationship that is native to the second data structure. For example, the second metadata may indicate a record that corresponds to a second native hierarchical relationship of the second data structure. In some embodiments, the second metadata structure may indicate a second data source upon which the second data structure recommendation is based.

In some embodiments, the system may receive a plurality of submissions of data structure recommendations. Furthermore, the system may iteratively update the database the hierarchical data structure of the crowdsourced databased based on the submissions. For example, the system may compare each submission to current data populated into the database as well as new and/or previous submissions. For example, the system may receive a third data structure recommendation, wherein the third data structure has a third metadata structure. The system may then input the third data structure recommendation into the machine learning model and receive an output of the machine learning model indicating a second record of the hierarchical data structure for populating the third data structure recommendation.

At step 506, process 500 (e.g., using control circuitry and/or one or more components described in FIGS. 1-4) inputs the first data structure recommendation and the second data structure recommendation into a machine learning model. For example, the system may input the first data structure recommendation and the second data structure recommendation into a machine learning model, wherein the machine learning model is trained to synchronize data structure recommendations based on metadata structures corresponding to inputted data structure recommendations. In some embodiments, the system may use the first and second data structure recommendations to train a NLP and/or machine learning model. The machine learning model may use one or more criteria for synchronizing data structure recommendations based on metadata structures corresponding to inputted data structure recommendations. For example, the system may generate an initial mapping of hierarchies across different data sources using a machine learning model (e.g., by semantically linking similar attributes across sources). The machine learning model may determine keyword similarities and/or semantic closeness between keywords in the first and second content, respectively, or the data sources for the first and second content.

For example, in one embodiment, the machine learning model is trained to synchronize data structure recommendations based on metadata structures corresponding to inputted data structure recommendations by retrieving a first category keyword for the first data source and retrieving a second category keyword for the second data source. For example, the system may identify a keyword of a topic (or category) under which the first data source indexes and/or organized the first data structure recommendation in its native hierarchy. Additionally, the system may identify a keyword of a topic (or category) under which the second data source indexes and/or organized the second data structure recommendation in its native hierarchy. The system may then determine a first similarity between the first category keyword and the second category keyword. For example, the system may determine a vector space distance between two textual entities (words, sentences, documents, etc.). The system may then compare the first similarity to a threshold similarity. The system may then determine that the first category keyword and the second category keyword correspond based on the first similarity equaling or exceeding the threshold similarity (and not correspond otherwise). The system may then populate the first data structure recommendation and the second data structure recommendation at the first record in the hierarchical data structure in response to determining that the first category keyword and the second category keyword correspond. It should be noted that the system may also compare a similarity of first and second content according to the above.

Additionally or alternatively, in one embodiment, the machine learning model is trained to synchronize data structure recommendations based on metadata structures corresponding to inputted data structure recommendations by retrieving first source content from the first data source and retrieving second source content from the second data source. For example, the system may determine a first semantic closeness (e.g., a closeness of meaning between two texts, wherein the texts may contain different words but still mean the same) between the first source content and the second source content. The system may then compare the first semantic closeness to a threshold semantic closeness and determine that first source content and the second source content correspond based on the first semantic closeness equaling or exceeding the threshold semantic closeness (and not correspond otherwise). The system may then populate the first data structure recommendation and the second data structure recommendation at the first record in the hierarchical data structure in response to determining that the first category keyword and the second category keyword correspond. It should be noted that the system may also compare a similarity of first and second keywords according to the above.

At step 508, process 500 (e.g., using control circuitry and/or one or more components described in FIGS. 1-4) receives an output of the machine learning model indicating a first record for populating both the first data structure recommendation and the second data structure recommendation. For example, the system may receive an output of the machine learning model indicating a first record in a native hierarchical data structure of a crowdsource database for populating both the first data structure recommendation and the second data structure recommendation. In some embodiments, the system may receive an output of the NLP and/or machine learning model predicting the metadata that establishes correspondence between all data structure recommendations.

At step 510, process 500 (e.g., using control circuitry and/or one or more components described in FIGS. 1-4) compares the first data structure recommendation and the second data structure recommendation. For example, the system may compare the first data structure recommendation and the second data structure recommendation in response to determining that the first data structure recommendation and the second data structure recommendation is populated at the first record. In some embodiments, the system may compare a received data structure recommendation to other received data structure recommendations and/or recommendations and/content already published in the crowdsourced database to determine how (or if) to user the data structure recommendation and/or content received in conjunction with the data structure recommendation.

For example, the system may use received data structure recommendations (and/or the data within) to validate other received data structure recommendations (and/or their respective content). For example, the system may validate the first data structure recommendation based on the second data structure recommendation. The system may then publish the first data structure recommendation in the crowdsource database based on validating the first data structure recommendation based on the second data structure recommendation.

At step 512, process 500 (e.g., using control circuitry and/or one or more components described in FIGS. 1-4) updates the crowdsource database. For example, the system may update the crowdsource database based on comparing the first data structure recommendation and the second data structure recommendation. The system may perform one or more actions when updating the database. For example, in some embodiments, the system may validate (as discussed above) the first data structure recommendation based on the second data structure recommendation and publish the first data structure recommendation in the crowdsource database based on validating the first data structure recommendation based on the second data structure recommendation. Additionally or alternatively, the system may determine additional information. For example, the system may determine statistics and/or other information based on the recommendation. For example, the system may determine a statistic for the first data structure recommendation based on the second data structure recommendation and publish the statistic for the first data structure recommendation in the crowdsource database. For example, the system may determine if a threshold number of recommendations (e.g., corresponding to the same record) submitted corresponding content. If so, the system may determine that the content is suitable and/or correct. The system may indicate this content accordingly by indicating the number of submissions, the number of users that agree, key portions of the content, and/or other information indicating that multiple users agree on the content.

In some embodiments, the system may determine what content is missing from the crowdsourced database (e.g., what content, topic, category, etc. needs to be populated in the database). In response, the system may generate requests to users for this content. As opposed to general inquires, the system may select users that have the specific and/or required qualification to contribute to the crowdsourced database on the missing content. For example, the system may determine a second record in the native hierarchical data structure of the crowdsource database that is unpopulated. The system may then retrieve a native metadata structure for the second record, wherein the native metadata structure defines the native hierarchical data structure of the crowdsource database at the second record. The system may then determine a third metadata structure corresponding to the native metadata structure. For example, the third metadata structure may indicate an organizational relationship that is native to a third party source (e.g., an organization relationship of scientific, academic, governmental and/or other institutions). The system may then identify a third user corresponding to the third metadata structure. For example, the system may identify a specific person and/or credentials (e.g., required degrees, specialties, credentials, etc.) that the person should have from the data source. The system may then transmit a request to the third user for a third data structure recommendation for populating the second record.

Additionally or alternatively, the system may iteratively update a hierarchical data structure based on crowdsourced data featuring non-homogenous metadata. For example, as submissions of data structure recommendations and content are received, the system may compare the new submission to incorporate them into the crowdsourced database. For example, the system may determine the third metadata structure corresponding to the native metadata structure comprised by retrieving a native category keyword for the native metadata structure and retrieving a third category keyword for a third data source for the third metadata structure. The system may then determine a second similarity between the native category keyword and the third category keyword. The system may compare the second similarity to the threshold similarity and determine that the native category keyword and the third category keyword correspond based on the second similarity equaling or exceeding the threshold similarity.

It is contemplated that the steps or descriptions of FIG. 5 may be used with any other embodiment of this disclosure. In addition, the steps and descriptions described in relation to FIG. 5 may be done in alternative orders, or in parallel to further the purposes of this disclosure. For example, each of these steps may be performed in any order, in parallel, or simultaneously to reduce lag, or increase the speed of the system or method. Furthermore, it should be noted that any of the devices or equipment discussed in relation to FIGS. 1-4 could be used to perform one of more of the steps in FIG. 5.

The above-described embodiments of the present disclosure are presented for purposes of illustration and not of limitation, and the present disclosure is limited only by the claims which follow. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method, the method comprising: receiving a first data structure recommendation from a first member of the crowd; receiving a second data structure recommendation from a second member of the crowd; using the first and second data structure recommendations to train natural language processing (NLP) or machine learning model; and receiving an output of the NLP or machine learning model predicting the metadata that establishes correspondence between all data structure recommendations.
2. A method of generating hierarchical data structures based on crowdsourced data featuring non-homogenous metadata, the method comprising: receiving a first data structure recommendation, wherein the first data structure recommendation has a first metadata structure; receiving a second data structure recommendation, wherein the second data structure recommendation has a second metadata structure; input the first data structure recommendation and the second data structure recommendation into a machine learning model, wherein the machine learning model is trained to synchronize data structure recommendations based on metadata structures corresponding to inputted data structure recommendations; and receiving an output of the machine learning model indicating a hierarchical data structure of a crowdsource database for the first data structure recommendation and the second data structure recommendation.
3. The method of any preceding embodiment, further comprising: in response to determining that the first data structure recommendation and the second data structure recommendation is populated at the first record, comparing the first data structure recommendation and the second data structure recommendation; and updating the crowdsource database based on comparing the first data structure recommendation and the second data structure recommendation.
4. The method of any preceding embodiment, wherein the first metadata structure indicates a first data source upon which the first data structure recommendation is based, and wherein the second metadata structure indicates a second data source upon which the second data structure recommendation is based.
5. The method of any preceding embodiment, wherein the machine learning model is trained to synchronize data structure recommendations based on metadata structures corresponding to inputted data structure recommendations by: retrieving a first category keyword for the first data source; retrieving a second category keyword for the second data source; determining a first similarity between the first category keyword and the second category keyword; comparing the first similarity to a threshold similarity; determining that the first category keyword and the second category keyword correspond based on the first similarity equaling or exceeding the threshold similarity; and populating the first data structure recommendation and the second data structure recommendation at the first record in the hierarchical data structure in response to determining that the first category keyword and the second category keyword correspond.
6. The method of any preceding embodiment, wherein the machine learning model is trained to synchronize data structure recommendations based on metadata structures corresponding to inputted data structure recommendations by: retrieving first source content from the first data source; retrieving second source content from the second data source; determining a first semantic closeness between the first source content and the second source content; comparing the first semantic closeness to a threshold semantic closeness; determining that first source content and the second source content correspond based on the first semantic closeness equaling or exceeding the threshold semantic closeness; and populating the first data structure recommendation and the second data structure recommendation at the first record in the hierarchical data structure in response to determining that the first category keyword and the second category keyword correspond.
7. The method of any preceding embodiment, further comprising: determining a second record in the native hierarchical data structure of the crowdsource database that is unpopulated; retrieving a native metadata structure for the second record, wherein the native metadata structure defines the native hierarchical data structure of the crowdsource database at the second record; determining a third metadata structure corresponding to the native metadata structure; identifying a third user corresponding to the third metadata structure; and transmitting a request to the third user for a third data structure recommendation for populating the second record.
8. The method of any preceding embodiment, wherein determining the third metadata structure corresponding to the native metadata structure comprises: retrieving a native category keyword for the native metadata structure; retrieving a third category keyword for a third data source for the third metadata structure; determining a second similarity between the native category keyword and the third category keyword; comparing the second similarity to the threshold similarity; and determining that the native category keyword and the third category keyword correspond based on the second similarity equaling or exceeding the threshold similarity.
9. The method of any preceding embodiment, further comprising: receiving a third data structure recommendation, wherein the third data structure has a third metadata structure; inputting the third data structure recommendation into the machine learning model; and receiving an output of the machine learning model indicating a second record of the hierarchical data structure for populating the third data structure recommendation.
10. The method of any preceding embodiment, wherein updating the crowdsource database based on comparing the first data structure recommendation and the second data structure recommendation comprises: validating the first data structure recommendation based on the second data structure recommendation; and publishing the first data structure recommendation in the crowdsource database based on validating the first data structure recommendation based on the second data structure recommendation.
1. The method of any preceding embodiment, wherein updating the crowdsource database based on comparing the first data structure recommendation and the second data structure recommendation further comprises: determining a statistic for the first data structure recommendation based on the second data structure recommendation; and publishing the statistic for the first data structure recommendation in the crowdsource database.
12. The method of any preceding embodiment, wherein the first data structure recommendation comprising first content for publishing in the crowdsource database, and wherein the second data structure recommendation comprising second content for publishing in the crowdsource database.
13. A tangible, non-transitory, machine-readable medium storing instructions that, when executed by a data processing apparatus, cause the data processing apparatus to perform operations comprising those of any of embodiments 1-12.
14. A system comprising: one or more processors and memory storing instructions that, when executed by the processors, cause the processors to effectuate operations comprising those of any of embodiments 1-12.
15. A system comprising means for performing any of embodiments 1-12.

## Claims

1. A system for generating hierarchical data structures based on crowdsourced data featuring non-homogenous metadata, the system comprising:
cloud-based storage circuitry configured to:
store a machine learning model, wherein the machine learning model is trained to synchronize data structure recommendations based on metadata structures corresponding to inputted data structure recommendations; and
a crowdsource database;
control circuitry configured to:
receive a first data structure recommendation from a first user, wherein the first data structure recommendation comprising first content for publishing in the crowdsource database, wherein the first data structure recommendation has a first metadata structure, and wherein the first metadata structure indicates a first data source upon which the first data structure recommendation is based;
receive a second data structure recommendation from a second user, wherein the second data structure recommendation comprising second content for publishing in the crowdsource database, wherein the second data structure recommendation has a second metadata structure, and wherein the second metadata structure indicates a second data source upon which the second data structure recommendation is based;
input the first data structure recommendation and the second data structure recommendation into the machine learning model
receive an output of the machine learning model indicating a first record in a native hierarchical data structure of a crowdsource database for populating both the first data structure recommendation and the second data structure recommendation;
compare the first data structure recommendation and the second data structure recommendation in response to determining that the first data structure recommendation and the second data structure recommendation is populated at the first record; and
validate the first data structure recommendation based on the second data structure recommendation; and
publish the first data structure recommendation in the crowdsource database based on validating the first data structure recommendation based on the second data structure recommendation; and
input/output circuitry configured to:
generate for display, on a user interface, the first content.

2. A method of generating hierarchical data structures based on crowdsourced data featuring non-homogenous metadata, the method comprising:
receiving a first data structure recommendation from a first user, wherein the first data structure recommendation has a first metadata structure;
receiving a second data structure recommendation from a second user, wherein the second data structure recommendation has a second metadata structure;
inputting the first data structure recommendation and the second data structure recommendation into a machine learning model, wherein the machine learning model is trained to synchronize data structure recommendations based on respective metadata structures;
receiving an output of the machine learning model indicating a first record in a native hierarchical data structure of a crowdsource database for populating both the first data structure recommendation and the second data structure recommendation;
in response to determining that the first data structure recommendation and the second data structure recommendation is populated at the first record, comparing the first data structure recommendation and the second data structure recommendation; and
updating the crowdsource database based on comparing the first data structure recommendation and the second data structure recommendation.

3. The method of claim 2, wherein the first metadata structure indicates a first data source upon which the first data structure recommendation is based, and wherein the second metadata structure indicates a second data source upon which the second data structure recommendation is based.

4. The method of claim 3, wherein the machine learning model is trained to synchronize data structure recommendations based on metadata structures corresponding to inputted data structure recommendations by:
retrieving a first category keyword for the first data source;
retrieving a second category keyword for the second data source;
determining a first similarity between the first category keyword and the second category keyword;
comparing the first similarity to a threshold similarity;
determining that the first category keyword and the second category keyword correspond based on the first similarity equaling or exceeding the threshold similarity; and
populating the first data structure recommendation and the second data structure recommendation at the first record in the native hierarchical data structure in response to determining that the first category keyword and the second category keyword correspond.

5. The method of claim 3, wherein the machine learning model is trained to synchronize data structure recommendations based on metadata structures corresponding to inputted data structure recommendations by:
retrieving first source content from the first data source;
retrieving second source content from the second data source;
determining a first semantic closeness between the first source content and the second source content;
comparing the first semantic closeness to a threshold semantic closeness;
determining that first source content and the second source content correspond based on the first semantic closeness equaling or exceeding the threshold semantic closeness; and
populating the first data structure recommendation and the second data structure recommendation at the first record in the native hierarchical data structure in response to determining that the first source content and the second source content correspond.

6. The method of claim 3, further comprising:
determining a second record in the native hierarchical data structure of the crowdsource database that is unpopulated;
retrieving a native metadata structure for the second record, wherein the native metadata structure defines the native hierarchical data structure of the crowdsource database at the second record;
determining a third metadata structure corresponding to the native metadata structure;
identifying a third user corresponding to the third metadata structure; and
transmitting a request to the third user for a third data structure recommendation for populating the second record.

7. The method of claim 6, wherein determining the third metadata structure corresponding to the native metadata structure comprises:
retrieving a native category keyword for the native metadata structure;
retrieving a third category keyword for a third data source for the third metadata structure;
determining a second similarity between the native category keyword and the third category keyword;
comparing the second similarity to a threshold similarity; and
determining that the native category keyword and the third category keyword correspond based on the second similarity equaling or exceeding the threshold similarity.

8. The method of claim 2, further comprising:
receiving a third data structure recommendation, wherein the third data structure has a third metadata structure;
inputting the third data structure recommendation into the machine learning model; and
receiving an output of the machine learning model indicating a second record of the native hierarchical data structure for populating the third data structure recommendation.

9. The method of claim 2, wherein updating the crowdsource database based on comparing the first data structure recommendation and the second data structure recommendation comprises:
validating the first data structure recommendation based on the second data structure recommendation; and
publishing the first data structure recommendation in the crowdsource database based on validating the first data structure recommendation based on the second data structure recommendation.

10. The method of claim 2, wherein updating the crowdsource database based on comparing the first data structure recommendation and the second data structure recommendation further comprises:
determining a statistic for the first data structure recommendation based on the second data structure recommendation; and
publishing the statistic for the first data structure recommendation in the crowdsource database.

11. The method of claim 2, wherein the first data structure recommendation comprising first content for publishing in the crowdsource database, and wherein the second data structure recommendation comprising second content for publishing in the crowdsource database.

12. A non-transitory, computer-readable medium for generating hierarchical data structures based on crowdsourced data featuring non-homogenous metadata, comprising instructions that, when executed by one or more processors, cause operations comprising:
receiving a first data structure recommendation from a first user, wherein the first data structure has a first metadata structure;
receiving a second data structure recommendation from a second user, wherein the second data structure has a second metadata structure;
inputting the first data structure recommendation and the second data structure recommendation into a machine learning model, wherein the machine learning model is trained to synchronize data structure recommendations based on respective metadata structures;
receiving an output of the machine learning model indicating a first record in a native hierarchical data structure of a crowdsource database for populating both the first data structure recommendation and the second data structure recommendation;
in response to determining that the first data structure recommendation and the second data structure recommendation is populated at the first record, comparing the first data structure recommendation and the second data structure recommendation; and
updating the crowdsource database based on comparing the first data structure recommendation and the second data structure recommendation.

13. The non-transitory, computer-readable medium of claim 12, wherein the first metadata structure indicates a first data source upon which the first data structure recommendation is based, wherein the second metadata structure indicates a second data source upon which the second data structure recommendation is based, wherein the first data structure recommendation comprising first content for publishing in the crowdsource database, and wherein the second data structure recommendation comprising second content for publishing in the crowdsource database.

14. The non-transitory, computer-readable medium of claim 13, wherein the machine learning model is trained to synchronize data structure recommendations based on metadata structures corresponding to inputted data structure recommendations by:
retrieving a first category keyword for the first data source;
retrieving a second category keyword for the second data source;
determining a first similarity between the first category keyword and the second category keyword;
comparing the first similarity to a threshold similarity;
determining that the first category keyword and the second category keyword correspond based on the first similarity equaling or exceeding the threshold similarity; and
populating the first data structure recommendation and the second data structure recommendation at the first record in the native hierarchical data structure in response to determining that the first category keyword and the second category keyword correspond.

15. The non-transitory, computer-readable medium of claim 13, wherein the machine learning model is trained to synchronize data structure recommendations based on metadata structures corresponding to inputted data structure recommendations by:
retrieving first source content from the first data source;
retrieving second source content from the second data source;
determining a first semantic closeness between the first source content and the second source content;
comparing the first semantic closeness to a threshold semantic closeness;
determining that first source content and the second source content correspond based on the first semantic closeness equaling or exceeding the threshold semantic closeness; and
populating the first data structure recommendation and the second data structure recommendation at the first record in the native hierarchical data structure in response to determining that the first source content and the second source content correspond.

16. The non-transitory, computer-readable medium of claim 13, further comprising:
determining a second record in the native hierarchical data structure of the crowdsource database that is unpopulated;
retrieving a native metadata structure for the second record, wherein the native metadata structure defines the native hierarchical data structure of the crowdsource database at the second record;
determining a third metadata structure corresponding to the native metadata structure;
identifying a third user corresponding to the third metadata structure; and
transmitting a request to the third user for a third data structure recommendation for populating the second record.

17. The non-transitory, computer-readable medium of claim 16, wherein determining the third metadata structure corresponding to the native metadata structure comprises:
retrieving a native category keyword for the native metadata structure;
retrieving a third category keyword for a third data source for the third metadata structure;
determining a second similarity between the native category keyword and the third category keyword;
comparing the second similarity to a threshold similarity; and
determining that the native category keyword and the third category keyword correspond based on the second similarity equaling or exceeding the threshold similarity.

18. The non-transitory, computer-readable medium of claim 12, further comprising:
receiving a third data structure recommendation, wherein the third data structure has a third metadata structure;
inputting the third data structure recommendation into the machine learning model; and
receiving an output of the machine learning model indicating a second record of the native hierarchical data structure for populating the third data structure recommendation.

19. The non-transitory, computer-readable medium of claim 12, wherein updating the crowdsource database based on comparing the first data structure recommendation and the second data structure recommendation comprises:
validating the first data structure recommendation based on the second data structure recommendation; and
publishing the first data structure recommendation in the crowdsource database based on validating the first data structure recommendation based on the second data structure recommendation.

20. The non-transitory, computer-readable medium of claim 12, wherein updating the crowdsource database based on comparing the first data structure recommendation and the second data structure recommendation further comprises:
determining a statistic for the first data structure recommendation based on the second data structure recommendation; and
publishing the statistic for the first data structure recommendation in the crowdsource database.
